# EUROPÄISCHE PATENTSCHRIFT

(11) **EP 1 744 943 B1**
(45) Veröffentlichungstag und Bekanntmachung des Hinweises auf die Patenterteilung: **17.10.2007**
(21) Anmeldenummer: 05747668.1
(22) Anmeldetag: 02.05.2005
(51) Int. Cl.: B62B 3/00, A22B 5/16

(54) **MESSER UND MESSERREGISTRIERSYSTEM**
KNIFE AND KNIFE REGISTRATION SYSTEM
COUTEAU ET SYSTEME D'ENREGISTREMENT DE COUTEAU

(30) Priorität: 04.05.2004 DE 102004022290
(43) Veröffentlichungstag der Anmeldung: 24.01.2007
(73) Patentinhaber: Friedr. Dick GmbH & Co.KG, 73779 Deizisau (DE)
(72) Erfinder: LEUZE, Wilhelm, 73730 Esslingen (DE)
(74) Vertreter: Holzmüller, Reinhold
(86) Internationale Anmeldenummer: PCT/DE2005/000812
(87) Internationale Veröffentlichungsnummer: WO 2005/108183

(56) Entgegenhaltungen:
- WO-A-01/42991
- WO-A-03/065227
- PATENT ABSTRACTS OF JAPAN Bd. 2003, Nr. 05, 12. Mai 2003 (2003-05-12) & JP 2003 010570 A (TCHIP SEMICONDUCTOR SA), 14. Januar 2003 (2003-01-14) & EP 1 428 635 A (NEMERIX SA) 16. Juni 2004 (2004-06-16)

## Beschreibung

Die Erfindung betrifft ein Messer mit einem Handgriff und einer Klinge. Derartige Messer werden z.B. in der lebensmittelverarbeitenden Industrie, speziell in Schlachtereien oder Zerlegebetrieben eingesetzt, z.B. um Fleisch von Tieren von Knochen zu trennen.

In lebensmittelverarbeitenden Betrieben, insbesondere in Großschlachtereien oder Zerlegebetrieben müssen die Messer in regelmäßigen Abständen geschliffen und gereinigt werden. Beim Schleifen der Messer ist es schwierig, das nachgeschliffene Messer dem Verwender des Messers (Messerbesitzer) wieder zuzuordnen. Ferner muss sichergestellt werden, dass alle Messer regelmäßig gereinigt werden. Da die Messerbesitzer üblicherweise ihr spezielles Messer bevorzugt behalten wollen ergeben sich häufig Unregelmäßigkeiten hinsichtlich des Schleif- und/oder Reinigungszyklus der Messer.
Ist ein Messer verloren gegangen, so muss dieses unbedingt wieder aufgefunden werden. Das Messer könnte z.B. in einer Charge zur Weiterverarbeitung, z.B. in einem Container bereitgehaltenen Fleisches verloren gegangen sein. Daraus würde sich, neben der Verletzungsgefahr für an der weiteren Verarbeitung beteiligte Personen, ein erhebliches Risiko hinsichtlich der Beschädigung von Verarbeitungsmaschinen ergeben. Das Messer könnte im schlimmsten Fall auch ganz oder evtl. von Mahlwerken zerkleinert in der Verarbeitungskette und im Endprodukt verbleiben. Dies würde zu großen Schadensersatzrisiken führen.

Nachteilig bei den bekannten Messern ist es, dass diese nicht zuverlässig individuell gekennzeichnet und im Falle eines Verlustes schwer wiederzufinden sind. Eine Kennzeichnung würde zu einem hohen Aufwand hinsichtlich einer Buchführung über die Messer, z.B. in Schlachtereien oder Zerlegebetrieben führen. Die schwere Auffindbarkeit kann zu erheblichen Risiken führen. Um die genannten Risiken auszuschließen, kann es vorkommen, dass vorsorglich große Mengen an Fleisch, in denen vermutlich ein Messer verloren gegangen ist, vernichtet werden müssen.

Aus WO 99/56918 A1 ist ein multifunktionales Taschenmesser bekannt geworden, mit einem Emergency Localisation Transmitter. Die Stromversorgung erfolgt über eine Batterie oder eine Solarzelle.

Das Dokument WO 01/42991 A offenbart ein Messer, in welchem ein Transponder integriert ist, um eine räumliche Ortung des Messers zu unterstützen, der eine Sende- und Empfangseinrichtung mit einem resonanten Schwingkreis aufweist, wobei die zum Speichern und Senden von Daten notwendige Energie aus dem Schwingkreis angekoppelt wird.

Der Erfindung liegt die Aufgabe zugrunde, ein Messer und ein Messerregistriersystem für die Lebensmittel verarbeitende Industrie bereitzustellen, welche die Nachteile des Standes der Technik vermeiden und insbesondere eine zuverlässige Handhabung des Messers in Grossbetrieben gewährleisten.

Diese Aufgabe wird durch das Messer, das Messerortungssystem und das Messerregistriersystem der Ansprüche 1, 4 und 6, 7 gelöst. Die abhängigen Ansprüche stellen bevorzugte Ausführungsformen der Erfindung dar.

Bei dem erfindungsgemäßen Messer mit einem Handgriff und einer Klinge handelt es sich bevorzugt um ein Ausbeinmesser oder ein Zerlegemesser, um Fleisch von Knochen zu lösen. Erfindungsgemäß ist in das Messer, bevorzugt in den Handgriff des Messers, ein Transponder integriert. D.h. der Transponder ist fest in den Handgriff des Messers eingearbeitet, z.B. in den Kunststoff, aus dem derartige Handgriffe bestehen, eingegossen. Der Transponder kann jedoch auch, z.B. geschützt durch eine Folie auf das Messer aufgeklebt sein. Ein Transponder umfasst eine Sende- und Empfangseinrichtung, also eine Kommunikationseinrichtung um mit einer Transponderkommunikationseinheit berührungslos zu kommunizieren und einen Datenspeicher und eine Steuereinheit um die Kommunikation, d.h. den Datentransfer und das Speichern der Daten bzw. das Auslesen der Daten zu steuern. Im Allgemeinen handelt es sich bei dem Transponder um ein elektronisches Bauteil im weitesten Sinne mit einem resonanten Schwingkreis, wobei das Bauteil Daten speichern kann und auf das, bzw. von dem berührungslos Daten gespeichert, bzw. ausgelesen werden können.

Der erfindungsgemäße Transponder erlaubt das berührungsfreie Speichern und Auslesen von Daten in einen Datenspeicher des Transponders. Dazu umfasst der Transponder eine Sende- und Empfangseinrichtung für elektromagnetische Wellen. Die Sende- und Empfangseinrichtung umfasst den resonanten Schwingkreis mit üblicherweise einer Induktivität und einer Kapazität, wobei die Induktivität gleichzeitig als Antenne wirkt. Die zum Speichern der Daten und zum Senden notwendige Energie wird erfindungsgemäß aus dem Schwingkreis ausgekoppelt. Eine Batterie kann dadurch entfallen.

Das erfindungsgemäße Messer kann beliebige Daten im Datenspeicher des Transponders abspeichern. Es wird dadurch ein "intelligentes Messer" geschaffen. Bevorzugt kann z.B. gespeichert werden:
- Eine individuelle Codierung des Messers, d.h. z.B. eine Seriennummer und/oder dessen Herstellungsdatum, um z.B. ein Datenabgleichen in einer externen, d.h. nicht im Messer gespeicherten Datenbank zu ermöglichen;
- Die jeweiligen Benutzer des Messers;
- Benutzungszeiten des Messers;
- Ort der Benutzung des Messers;
- Zeiten zur Wartung des Messers, z.B. Schleifdatum;
- Produktionsdaten, z.B. der Abnehmer des Produkts bei dessen Herstellung das Messer verwendet wurde;

Diese Daten können berührungsfrei mittels einer handelsüblichen Transponderkommunikationseinheit, also einem Transponderlese- und/oder -schreibgerät im Messer gespeichert bzw. aus dem Messer ausgelesen werden. Eine personalintensive Messerausgabestelle kann dadurch entfallen. Die Messer können in einer automatisierten Messerausgabestelle verwahrt werden. Über die Ausgabe eines jeden Messers an einen Angestellten und die Rückgabe des Messers kann automatisch Buch geführt werden. Weiter kann ein Computersystem, an das die Transponderkommunikationseinheit angeschlossen ist, zuverlässig erkennen, ob ein erfindungsgemäßes Messer verloren gegangen ist. Dies kann z.B. festgestellt werden, wenn ein entsprechendes Messer, bzw. dessen gespeicherte Daten, nach einem Messerverwendungsplan nicht rechtzeitig an der Transponderkommunikationseinheit zu dessen Registrierung eingelesen werden.

Weiter ist es möglich, ein erfindungsgemäßes Messer räumlich zu orten. Das räumliche Orten von Transpondern ist bekannt. Dazu wird mittels bekannter Ortungseinrichtungen ein Sendeort von, von einem Sender, d.h. von der Sende- und Empfangseinrichtung des Transponders, ausgesandten elektromagnetischen Wellen angepeilt und damit die Richtung, in der sich der Transponder befindet, festgestellt. Die Ortungseinrichtung kann z.B. ein Handgerät umfassen, das dann von einer suchenden Person in Richtung des Sendeortes geführt wird, wodurch das Auffinden des Transponders und damit des erfindungsgemäßen Messers ermöglicht wird.

Das erfindungsgemäße Messer kann so an einem beliebigen Ort aufgefunden werden. Z.B. kann ein erfindungsgemäßes Messer in einer großen Menge von Fleisch angepeilt werden. Das Messer kann so mit geringem Aufwand wiederaufgefunden werden, wodurch sich ein Vernichten des Fleisches vermeiden lässt.

Weiter ist ein zuverlässiger Diebstahlschutz für ein erfindungsgemäßes Messer leicht zu verwirklichen. Dazu könnte z.B. an den Ausgängen eines Betriebes in dem erfindungsgemäße Messer verwendet werden ein Gerät aufgebaut werden, das ähnlich wie an Ausgängen in Kaufhäusern, den Transponder und damit ein mitgeführtes erfindungsgemäßes Messer registriert und meldet.

Bevorzugt umfasst der in ein erfindungsgemäßes Messer integrierte Transponder einen Mikrochip. Insbesondere sind bevorzugt die Sende- und Empfangseinrichtung und der Datenspeicher und die Steuereinheit auf dem Mikrochip integriert. Ein Transponder ist durch Integration auf einem Mikrochip besonders kostengünstig herzustellen. Ferner wird dadurch eine geringe Baugröße des Transponders erreicht, wodurch sich der Transponder gut in das erfindungsgemäße Messer integrieren lässt.

Besonders bevorzugt ist der Transponder eingerichtet, eine räumliche Ortung des Messers zu unterstützen. Dies führt zu einer weiteren Erleichterung der Auffindbarkeit eines erfindungsgemäßen Messers. Dazu ist die Steuereinheit bevorzugt eingerichtet, ein Sendesignal in Abhängigkeit einer Intensität eines von der Sende- und Empfangseinrichtung empfangenen Signals, modifiziert über die Sende- und Empfangseinrichtung, zu senden. Das Signal kann z.B. mittels einer Richtfunkantenne in Richtung des Transponders ausgestrahlt werden. Wenn die Ausstrahlrichtung der Lage des Transponders entspricht, so ist die Intensität, mit der das Signal in der Sende- und Empfangseinrichtung empfangen wird, am größten. Entsprechend kann z.B. die Frequenz des Sendesignals gezielt variiert werden.

In einer weiteren Ausführungsform eines erfindungsgemäßen Messers ist auf eine Oberfläche des Messers, z.B. auf der Klinge, ein Barcode und/oder ein Magnetstreifen aufgebracht. Mittels eines Barcodes oder eines Magnetstreifens kann das erfindungsgemäße Messer zusätzlich individuell codiert werden. Z.B. im Falle einer Beschädigung des Transponders wird dadurch das Messer zusätzlich sicher identifizierbar. Auf dem Magnetstreifen können die vom Transponder gespeicherten Daten ganz oder Teilweise redundant gespeichert sein, wogegen der Barcode lediglich eine Codierung des Messers erlaubt.

Mit einem Messerortungssystem, mit mindestens einem erfindungsgemäßen Messer und einer Ortungseinrichtung, eingerichtet, eine räumliche Position des Transponders des Messers durch Detektieren eines Sendeortes der Sende- und Empfangseinrichtung des Transponders zu orten, kann ein verloren gegangenes erfindungsgemäßes Messer wieder aufgefunden werden. Die Ortungseinrichtung des erfindungsgemäßen Messerortungssystems umfasst bevorzugt eine Richtfunkantenne. Mittels der Richtfunkantenne können sowohl Signale von relativ großer Entfernung zur Aufnahme einer Kommunikation mit dem Transponder eines verlorengegangenen erfindungsgemäßen Messers abgestrahlt werden, als auch von dem Transponder ausgesendete Signale, bzw. deren Emissionsrichtung, geortet werden.

Ein erfindungsgemäßes Messerregistriersystem umfasst mindestens ein erfindungsgemäßes Messer und mindestens ein Computerterminal, wobei das Computerterminal eine Transponderkommunikationseinheit aufweist. Die Transponderkommunikationseinheit ist zum Empfang und/oder zum Senden von Signalen vom bzw. zum Transponder eingerichtet. Dadurch ist eine berührungsfreie Kommunikation zwischen dem Transponder und der Transponderkommunikationseinheit möglich. Das Computerterminal steuert die Kommunikation und stellt Daten, die in den Datenspeicher des Transponders geschrieben werden sollen, zur Verfügung. Ferner kann das Computerterminal aus dem Datenspeicher des Transponders ausgelesene Daten weiter verarbeiten, d.h. auswerten, z.B. mit in einer Datenbank befindlichen Daten abgleichen. Mehrere Computerterminals können in einem Computernetz verbunden sein. Dadurch kann eine Verwaltung von sehr vielen Messern in einem großen Betrieb erleichtert werden.

Alternativ oder zusätzlich kann ein Computerterminal eines erfindungsgemäßen Messerregistriersystems einen Barcodeleser umfassen. Dadurch wird eine von dem Transponder unabhängige Identifizierung eines erfindungsgemäßen Messers ermöglicht.

Das erfindungsgemäße Messerregistriersystem kann zusätzlich ein erfindungsgemäßes Messerortungssystem umfassen. Die Ortungseinrichtung des Messerortungssystems ist dabei bevorzugt mit dem Computerterminal vernetzt. Dadurch können der Ortungseinrichtung automatisch Daten eines verlorenen Messers übermittelt werden. Die Ortungseinrichtung kann z.B. gezielt nach einem Messer mit einer bestimmten Codierung suchen. Weiter ist es möglich, in einem Betrieb oder nur in einer Produktionshalle ein oder mehrere Ortungseinrichtungen fest zu installieren. Dadurch können die Orte, an denen sich erfindungsgemäße Messer innerhalb des Betriebes befinden, ständig überwacht werden.

Die Erfindung wird nachfolgend anhand eines Ausführungsbeispiels unter Bezugnahme auf die Zeichnung näher erläutert.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

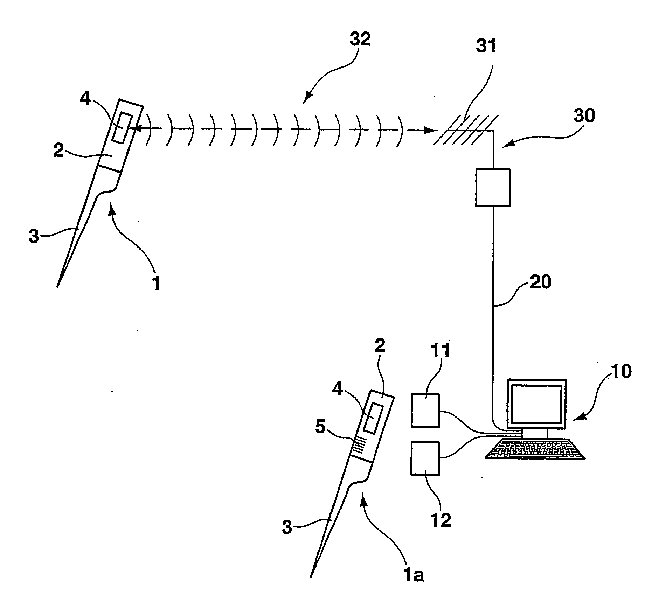

In Figur 1 ist ein erfindungsgemäßes Messerregistriersystem mit einem erfindungsgemäßen Messerortungssystem dargestellt. Dargestellt sind zwei erfindungsgemäße Messer 1,1a. Die erfindungsgemäßen Messer weisen jeweils einen Handgriff 2 und eine Klinge 3 auf. Im Handgriff 2 der Messer 1,1a ist jeweils ein Transponder 4 integriert. Das Messer 1a weist ferner einen auf dessen Oberfläche aufgebrachten Barcode 5 auf. Das Messer 1a befindet sich in der Nähe eines Computerterminals 10, das sowohl eine Transponderkommunikationseinheit 11, als auch einen Barcodeleser 12 aufweist. Das Messer 1a wird z.B. gerade berührungslos über die Transponderkommunikationseinheit 11 registriert. Das Computerterminal ist über eine Vernetzung 20 mit einer Ortungseinrichtung 30 verbunden. Die Ortungseinrichtung umfasst eine Richtfunkantenne 31. Das Messer 1 ist z.B. von dem Computerterminal 10 über die Vernetzung 20 an die Ortungseinrichtung 30 als verlorengegangen gemeldet. Über die Richtfunkantenne 31 tauscht die Ortungseinrichtung 30 daraufhin elektromagnetische Signale 32 mit dem Messer 1, bzw. dem darin integrierten Transponder 4, aus. Dadurch wird der Ort, an dem sich das verlorene Messer 1 befindet, angepeilt und die Lage des Messers geortet.

Vorgeschlagen wird ein Messer 1,1a mit einem Handgriff 2 und einer Klinge 3, ein Ausbeinmesser oder ein Zerlegemesser, wobei in das Messer 1,1a, in den Handgriff 2, ein Transponder 4 mit einer Sende- und Empfangseinrichtung und einem Datenspeicher und einer Steuereinheit integriert ist. Derartige Messer eignen sich zum Einsatz z.B. in der lebensmittelverarbeitenden Industrie, speziell in der Fleisch verarbeitenden Industrie, z.B. in Schlachtereien und Zerlegebetrieben, z.B. um Fleisch von Tieren von Knochen zu trennen aber auch zur Verwendung in Gemüse verarbeitenden Betrieben.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Messer (1, 1a) zum Einsatz in der Lebensmittel verarbeitenden Industrie mit einem Handgriff (2) und einer Klinge (3), bevorzugt Ausbeinmesser, wobei in das Messer (1, 1a), bevorzugt in den Handgriff (2), ein Transponder (4) integriert ist, wobei der Transponder eine Sende- und Empfangseinrichtung für elektromagnetische Wellen, mit einem resonanten Schwingkreis, aufweist, wobei die zum Speichern von Daten und zum Senden notwendige Energie aus dem Schwingkreis ausgekoppelt wird,
**dadurch gekennzeichnet, dass**
der Transponder (4) eingerichtet ist, eine räumliche Ortung des Messers (1,1a) zu unterstützen, und dass zur Unterstützung der räumlichen Ortung eine Steuereinheit des Transponders eingerichtet ist, ein Sendesignal in Abhängigkeit einer Intensität eines von einer Sende- und Empfangseinrichtung des Transponders empfangenen Signals, modifiziert über die Sende- und Empfangseinrichtung, zu senden.

2. Messer (1,1a) nach Anspruch 1,
**dadurch gekennzeichnet, dass**
der Transponder (4) einen Mikrochip umfasst, bevorzugt, dass eine Sende- und Empfangseinrichtung und ein Datenspeicher und eine Steuereinheit auf dem Mikrochip integriert sind.

3. Messer nach mindestens einem der Ansprüche 1 bis 2,
**dadurch gekennzeichnet, dass**
auf einer Oberfläche des Messers (1) ein Barcode (5) und/oder ein Magnetstreifen aufgebracht ist.

4. Messerortungssystem, mit mindestens einem Messer (1,1a) nach mindestens einem der Ansprüche 1 bis 3 und einer Ortungseinrichtung (30), eingerichtet, eine räumliche Position des Transponders (4) des Messers (1,1a) durch Detektieren eines Sendeortes einer Sende- und Empfangseinrichtung des Transponders (4) zu orten.

5. Messerortungssystem nach Anspruch 4,
**dadurch gekennzeichnet, dass**
die Ortungseinrichtung (30) eine Richtfunkantenne (31) umfasst.

6. Messerregistriersystem, mit mindestens einem Messer (1,1a) nach mindestens einem der Ansprüche 1 bis 3 und mindestens einem Computerterminal (10), wobei das Computerterminal (10) eine Transponderkommunikationseinheit (11) umfasst.

7. Messerregistriersystem mit mindestens einem Messer (1,1a) nach Anspruch 3 und mindestens einem Computerterminal (10), wobei das Computerterminal (10) einen Barcodeleser (12) und/oder ein Magnetstreifentesegerät umfasst.

8. Messerregistriersystem, mit mindestens einem Messer (1,1a) nach mindestens einem der Ansprüche 1 bis 3 und mindestens einem Computerterminal (10) nach Anspruch 6 und/oder Anspruch 7 und einem Messerortungssystem nach mindestens einem der Ansprüche 4 bis 5.

## Claims

1. Knife (1, 1a) for use in the food processing industry, comprising a handle (2) and a blade (3), preferably a deboning knife, wherein a transponder (4) is integrated in the knife (1, 1a), preferably in the handle (2), wherein the transponder has a transmitting and receiving device for electromagnetic waves comprising a resonant circuit, wherein the energy required for storing data and transmission is decoupled from the resonant circuit, **characterized in that** the transponder (4) is arranged to support spatial detection of the knife (1, 1a), and a control unit of the transponder is arranged to transmit a transmission signal in dependence on the intensity of a signal received by the transmitting and receiving device of the transponder, which is modified by the transmitting and receiving device, for supporting the spatial detection.

2. Knife (1, 1a) according to claim 1, **characterized in that** the transponder (4) comprises a microchip, the microchip preferably comprising an integrated transmitting and receiving device, a data storage, and a control unit.

3. Knife according to at least one of the claims 1 and 2, **characterized in that** a bar code (5) and/or a magnetic stripe is/are disposed on a surface of the knife (1).

4. Knife detection system comprising at least one knife (1, 1a) according to at least one of the claims 1 through 3, and a detection device (30), arranged to detect a spatial position of the transponder (4) of the knife (1, 1a) by detecting a transmission location of a transmitting and receiving device of the transponder (4).

5. Knife detection system according to claim 4, **characterized in that** the detection device (30) comprises a radio link antenna (31).

6. Knife registration system comprising at least one knife (1, 1a) according to at least one of the claims 1 through 3, and at least one computer terminal (10), wherein the computer terminal (10) comprises a transponder communication unit (11).

7. Knife registration system comprising at least one knife (1, 1a) according to claim 3, and at least one computer terminal (10), wherein the computer terminal (10) comprises a bar code reader (12) and/or a magnetic stripe reader.

8. Knife registration system comprising at least one knife (1, 1a) according to at least one of the claims 1 through 3, at least one computer terminal (10) according to claim 6 and/or claim 7, and a knife detection system according to at least one of the claims 4 and 5.

## Revendications

1. Couteau (1, 1a) utilisé dans l'industrie agroalimentaire comportant une poignée (2) et une lame (3), de préférence un couteau à désosser, dans lequel, dans le couteau (1, 1a), de préférence dans la poignée (2), un transpondeur (4) est intégré, dans lequel le transpondeur présente un dispositif d'émission et de réception pour ondes électromagnétiques, comportant un circuit oscillant résonnant, dans lequel l'énergie nécessaire pour le stockage des données et pour l'émission est découplée du circuit oscillant, **caractérisé en ce que**
le transpondeur (4) est agencé pour prendre en charge une localisation spatiale du couteau (1, 1a), et **en ce que**, pour prendre en charge la localisation spatiale, une unité de commande du transpondeur est agencée pour émettre un signal d'émission selon l'intensité d'un signal reçu par le dispositif d'émission et de réception du transpondeur, modifié par l'intermédiaire du dispositif d'émission et de réception.

2. Couteau (1, 1a) selon la revendication 1, **caractérisé en ce que** le transpondeur (4) comprend une micro-puce, de préférence **en ce qu'**un dispositif d'émission et de réception et une mémoire de données et une unité de commande sont intégrés sur la micro-puce.

3. Couteau selon au moins une des revendications 1 à 2, **caractérisé en ce qu'**un code à barres (5) et/ou une bande magnétique est disposé(e) sur la surface du couteau (1).

4. Système de localisation de couteau, comportant au moins un couteau (1, 1a) selon au moins une des revendications 1 à 3 et un dispositif de localisation (30), agencé pour localiser une position spatiale du transpondeur (4) du couteau (1, 1a) par détection d'un lieu d'émission d'un dispositif d'émission et de réception du transpondeur (4).

5. Système de localisation de couteau selon la revendication 4, **caractérisé en ce que** le dispositif de localisation (30) comprend une antenne de transmission (31) par faisceau hertzien.

6. Système d'enregistrement de couteau, comportant au moins un couteau (1, 1a) selon au moins une des revendications 1 à 3 et comportant au moins un terminal informatique (10), dans lequel le terminal informatique (10) comprend une unité de communication par transpondeur (11).

7. Système d'enregistrement de couteau comportant au moins un couteau (1, 1a) selon la revendication 3 et comportant au moins un terminal informatique (10), dans lequel le terminal informatique (10) comprend un lecteur de codes à barres (12) et/ou un dispositif de lecture de bande magnétique.

8. Système d'enregistrement de couteau, comportant au moins un couteau (1, 1a) selon au moins une des revendications 1 à 3 et comportant au moins un terminal informatique (10) selon la revendication 6 et/ou la revendication 7 et un système de localisation de couteau selon au moins une des revendications 4 à 5.
